# EUROPÄISCHE PATENTSCHRIFT

(11) **EP 0 956 756 B1**
(45) Veröffentlichungstag und Bekanntmachung des Hinweises auf die Patenterteilung: **02.07.2003**
(21) Anmeldenummer: 99105988.2
(22) Anmeldetag: 25.03.1999
(51) Int. Cl.: A01C 7/12

(54) **Kombiniertes Normal- und Feinsärad**
Combined normal and fine seed wheel
Roue combinée à semences fines et normales

(30) Priorität: 04.04.1998 DE 19815198
(43) Veröffentlichungstag der Anmeldung: 17.11.1999
(73) Patentinhaber: Amazonen-Werke H. Dreyer GmbH & Co. KG, 49205 Hasbergen (DE)
(72) Erfinder: Brook, Gebhard, 49429 Visbek (DE)

(56) Entgegenhaltungen:
- EP-A- 0 209 063
- BE-A- 501 918
- DE-A- 3 429 817
- DE-U- 9 113 968
- FR-A- 1 563 965
- FR-A- 2 070 444

## Beschreibung

Die Erfindung betrifft ein kombiniertes Normal- und Feinsärad gemäß des Oberbegriffes des Patentanspruches.

Ein derartiges kombiniertes Normal- und Feinsärad für eine Sämaschine ist beispielsweise in der DE-34 29 817 in den Fig. 4 und 5 beschrieben. Dieses kombinierte Normal- und Feinsärad weist einen Kupplungsstift auf, der mittels eines Werkzeuges verschoben werden muß. Desweiteren sind die Förderzähne auf beiden Seiten schräg zur Mantelfläche des Särades abfallend ausgebildet.

Der Erfindung liegt die Aufgabe zugrunde, das bekannte kombinierte Normal- und Feinsärad für Sämaschinen in vorteilhafter Weise weiterzubilden.

Hierzu ist vorgesehen, daß die Förderzähne des Normalsärades sägezahnartig ausgebildet sind, und daß die Außenflächen der Zähne zumindest annähernd bis an die Seitenwände des Sägehäuses heranragen. Infolge dieser Maßnahme wird in überraschend einfacher Weise eine gleichmäßige und kontinuierliche Saatgutausbringung, auch bei sich ändernder Beschaffenheit des Saatgutes innerhalb einer Saatgutcharge sichergestellt.

Weitere Einzelheiten der Erfindung sind der Beispielsbeschreibung und den Zeichnungen zu entnehmen. Hierbei zeigen
- Fig.1: das kombinierte Normal- und Feinsärad für eine Sämaschine, angeordnet in einem Sägehäuse, in perspektivischer Darstellung,
- Fig.2: das kombinierte Normal- und Feinsärad in perspektivischer Darstellung und
- Fig.3: das Normal- und Feinsärad in perspektivischer Darstellung, jedoch anderer Ansicht.

Das kombinierte Normal- und Feinsärad 1 ist auf der Säwelle 2 innerhalb des Sägehäuses 3 angeordnet. Das kombinierte Särad 1 besteht aus dem Normalsärad 4 und dem Feinsärad 5, welches sich nebeneinander in dem Sägehäuse 3 befindet. Mit Hilfe einer nicht dargestellten formschlüssigen Verbindung ist das Feinsärad 5 mit der Säwelle 2 formschlüssig verbunden. Das Normalsärad 4 weist die parallel zu der Bohrung 6 für Säwelle 2 eine weitere Bohrung 7 auf. In diese Bohrung 7 wird der Kupplungsstift 8 eingesetzt, der mit einer an dem Normalsärad 4 angespritzten Arretierungseinrichtung 9 zusammenwirkt, um den Kupplungsstift 8 in zwei Stellungen zu halten.

In der Bohrung 7 des Normalsärades 4 ist der Kupplungsstift 8 verschiebbar angeordnet. Der Kupplungsstift 8 und die zugehörige Bohrung 7 weisen eine derartige Größe auf, daß der Kupplungsstift 8 leicht werkzeuglos verschiebbar sind. Ebenfalls weist die in dem Feinsärad 5 angeordnete Öffnung 10, durch welche der Kupplungsstift 8 in die eine Richtung verschiebbar ist, ebenfalls eine derartige Größe auf, daß mittels eines Fingers der Kupplungsstift 8 in Pfeilrichtung 11 verschoben werden kann.

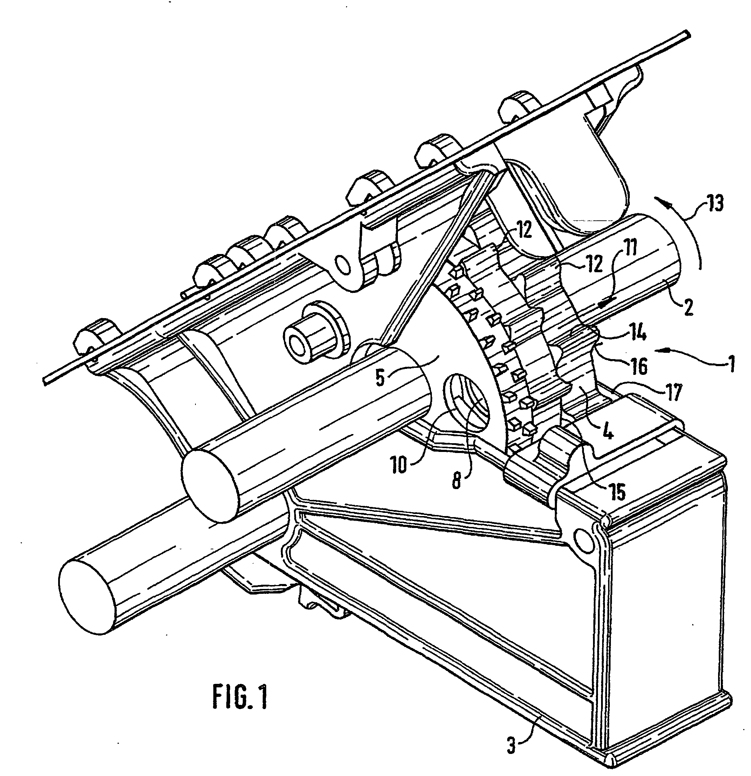

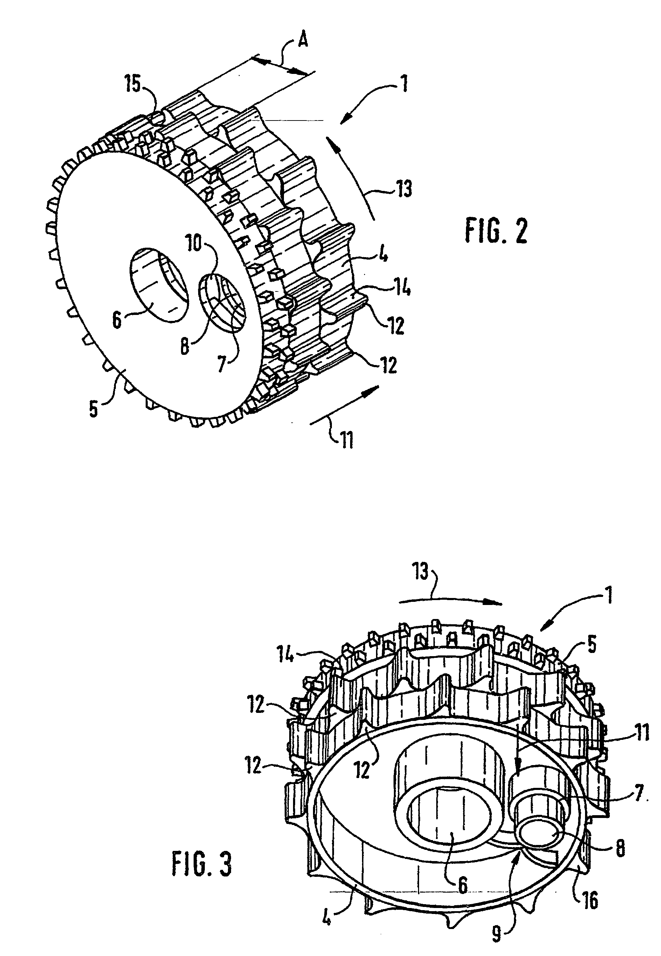

Die Förderzähne 12 des Normalsärades 4 sind, wie die Fig.1 bis 3 entnehmbar ist, sägezahnartig ausgebildet. Auf der in Drehrichtung 13 zugewandten Seite 14 des Förderzahnes 12 ist die Fläche des Förderzahnes 12 in etwa in radialer Richtung ausgerichtet ausgebildet. Die Förderzähne 12 des Normalsärades 4 sind in der Mitte 15 des Normalsärades 4 geteilt. Die eine Hälfte der Förderzähne 12 ist gegen die andere Hälfte der Förderzähne 12 um eine halbe Abstandslänge A von Zahn 12 zu Zahn 12 versetzt angeordnet. Die Außenflächen 16 der Zähne 12 ragen zumindest annähernd bis an die Seitenwände 17 des Sägehäuses 3 heran, wie die Fig.1 zeigt.

## Patentansprüche

1. Kombiniertes Normal- und Feinsärad für eine Sämaschine, wobei ein Feinsärad mittels einer formschlüssigen und/oder klemmartigen Verbindung mit der Säwelle verbindbar ist und neben dem Normalsärad als getrenntes Teil nebeneinander in einem Sägehäuse auf einer gemeinsamen Säwelle gelagert ist, wobei das Feinsärad mit dem Normalsärad mit Hilfe eines durch Arretierungselemente in zumindest zwei Betriebsstellungen arretierbaren Kupplungsstiftes verbindbar ist und das Feinsärad sowie das Normalsärad außer ihrer Mittelbohrung jeweils eine weitere Bohrung aufweisen, in der der Kupplungsstift angeordnet ist, wobei die Förderzähne (12) des Normalsärades (4) in der Mitte (15) des Normalsärades (4) geteilt und die eine Hälfte der Förderzähne (12) gegen die andere Hälfte der Förderzähne (12) um eine halbe Abstandslänge (A) von Zahn (12) zu Zahn (12) versetzt angeordnet sind **dadurch gekennzeichnet, daß** die Förderzähne (12) des Normalsärades (4) sägezahnartig ausgebildet sind, daß die Außenflächen (16) der Zähne (4) zumindest annähernd bis an die Seitenwände (17) des Sägehäuses (3) heranragen.

## Claims

1. Combined normal-sowing and fine-sowing wheel for a seed drill, a fine-sowing wheel being connectable to the sowing shaft by means of a form-locking and/or clamp-like connection and being mounted adjacent the normal-sowing wheel as a separate member on a common sowing shaft adjacent each other in a seed housing, the fine-sowing wheel being connectable to the normal-sowing wheel by means of a coupling pin, which is lockable in at least two operational positions by locking members, and the fine-sowing wheel as well as the normal-sowing wheel each having, besides their central bore, an additional bore in which the coupling pin is disposed, the conveyor teeth (12) of the normal-sowing wheel (4) being divided-up in the centre (15) of the normal-sowing wheel (4), and one half of the conveyor teeth (12) being disposed in an offset manner from the other half of the conveyor teeth (12) by half a spacing length (A) from tooth (12) to tooth (12), **characterised in that** the conveyor teeth (12) of the normal-sowing wheel (4) have a saw-tooth configuration, and **in that** the outer faces (16) of the teeth (4) extend at least approximately to the lateral walls (17) of the drill housing (3).

## Revendications

1. Roue combinée pour des semences normales et fines d'un semoir, dont une roue à semences fines pouvant être reliée à l'arbre du semoir par une liaison par la forme et/ou par serrage, est montée à côté de la roue à semences normales comme pièce séparée, de façon juxtaposée dans une boîte à semences sur l'arbre de semoir commun,
la roue à semences fines peut être reliée à la roue à semences normales à l'aide d'une broche de couplage qui peut être tenue par des éléments de blocage dans au moins deux positions de fonctionnement, et la roue à semences fines ainsi que la roue à semences normales comportent en dehors de leur perçage central chaque fois un autre perçage pour recevoir la broche de couplage,
les dents de transfert (12) de la roue à semences normales (4) étant divisées au milieu (15) de la roue à semences normales (4) et une moitié des dents de transfert (12) est décalée par rapport à l'autre moitié des dents de transfert (12) chaque fois d'un demi-intervalle (A) d'une dent (12) à l'autre dent (12).
**caractérisée en ce que**
les dents de transfert (12) de la roue à semences normales (4) ont une forme de dents de scie, et
la surface extérieure (16) des dents (4) arrive au moins sensiblement jusqu'au niveau des parois latérales (17) de la boîte à semences (3).
